# EUROPÄISCHE PATENTSCHRIFT

(11) **EP 1 163 428 B1**
(45) Veröffentlichungstag und Bekanntmachung des Hinweises auf die Patenterteilung: **25.08.2004**
(21) Anmeldenummer: 00925130.7
(22) Anmeldetag: 21.03.2000
(51) Int. Cl.: F01D 11/00, F01D 5/14

(54) **LEITSCHAUFEL UND LEITSCHAUFELKRANZ FÜR EINE STRÖMUNGSMASCHINE, SOWIE BAUTEIL ZUR BEGRENZUNG EINES STRÖMUNGSKANALS**
GUIDE BLADE AND GUIDE BLADE RIM FOR A FLUID-FLOW MACHINE AND COMPONENT FOR DELIMITING A FLOW CHANNEL
AUBE DIRECTRICE ET COURONNE DIRECTRICE POUR TURBOMACHINE, ET ELEMENT POUR LIMITER UN CANAL D'ECOULEMENT

(30) Priorität: 24.03.1999 EP 99105966
(43) Veröffentlichungstag der Anmeldung: 19.12.2001
(73) Patentinhaber: SIEMENS AKTIENGESELLSCHAFT, 80333 München (DE)
(72) Erfinder: TIEMANN, Peter, D-58452 Witten (DE)
(86) Internationale Anmeldenummer: PCT/EP2000/002499
(87) Internationale Veröffentlichungsnummer: WO 2000/057032

(56) Entgegenhaltungen:
- FR-A- 2 715 968
- US-A- 2 873 088
- US-A- 3 008 689
- US-A- 3 104 093
- US-A- 3 294 364
- US-A- 3 309 058
- US-A- 5 244 345

## Beschreibung

Die Erfindung betrifft eine Leitschaufel für eine Strömungsmaschine, insbesondere für eine Turbine, speziell eine Gasturbine, für den Einsatz in einem Kraftwerk zur Energieerzeugung. Die Erfindung betrifft auch einen Leitschaufelkranz aus solchen Leitschaufeln.

Eine solche Gasturbine weist eine Welle oder einen Rotor auf, mit dem sogenannte Laufschaufeln fest verbunden sind. Die Laufschaufeln erstrecken sich in radialer Richtung in einen Strömungskanal der Turbine hinein. Mehrere der Laufschaufeln bilden in Umfangsrichtung des Rotors einen Laufschaufelkranz. In Längsrichtung des Rotors sind mehrere Laufschaufelkränze voneinander beabstandet angeordnet. Am Turbinengehäuse sind sogenannte Leitschaufeln angeordnet, die sich von außen in den Strömungskanal in radialer Richtung erstrecken. Die Leitschaufeln sind ebenfalls in Leitschaufelkränzen angeordnet, wobei die einzelnen Leitschaufelkränze in die Laufschaufelkränze zahnartig eingreifen. Im Gegensatz zu den Laufschaufeln sind die Leitschaufeln fest und unbeweglich am Gehäuse befestigt. Der zwischen den Laufschaufeln und den Leitschaufeln eingeschlossene Strömungskanal wird von den Leitschaufeln und Laufschaufeln begrenzt und nach außen abgedichtet. Hierzu weisen in der Regel sowohl die Lauf- als auch die Leitschaufeln im Bereich ihres Schaufelfußes, mit dem sie am Rotor bzw. am Gehäuse befestigt sind, eine sogenannte Plattform auf. Diese erstreckt sich im Wesentlichen senkrecht zu ihrem Schaufelblatt, welches radial in den Strömungskanal hineinragt.

Insbesondere bei Gasturbinen im Bereich der Energieerzeugung treten sehr hohe Temperaturen auf. Im Zuge von Effizienzsteigerungen werden immer höhere Gastemperaturen angestrebt. Damit steigen die Anforderungen an die verwendeten Materialien und an die in der Regel notwendige Kühlung der einzelnen Bauteile der Gasturbine.

Aus der DE 26 28 807 A1 geht ein Prallkühlsystem für eine Gasturbinenschaufel hervor. Die Gasturbinenschaufel ist entlang einer Schaufelachse gerichtet und weist entlang der Schaufelachse ein Schaufelblatt und einen Plattformbereich auf. Im Plattformbereich erstreckt sich quer zur Schaufelachse die Plattform vom Schaufelblatt weg in etwa senkrecht nach außen. Die Plattform bildet dabei einen Teil des Strömungskanals für ein Arbeitsfluid (Heißgas), welches die Gasturbine durchströmt. Durch die sehr hohen Temperaturen im Strömungskanal wird die dem Heißgas ausgesetzte Oberfläche der Plattform stark thermisch belastet. Zur Kühlung der Plattform ist vor der dem Heißgas abgewandten Seite der Plattform ein gelochtes Wandelement angeordnet. Über die Löcher in dem Wandelement tritt Kühlluft ein und trifft auf die dem Heißgas abgewandte Seite der Plattform. Damit wird eine effiziente Prallkühlung erreicht.

Die WO 97/12125 A1 zeigt ein Dichtelement zur Dichtung eines Spaltes zwischen Bauteilen einer Gasturbinenanlage. Zwei in einem Schaufelkranz zueinander unmittelbar benachbarte Schaufeln weisen an gegenüberliegenden Kanten ihrer Plattformen einander gegenüberliegende Nuten auf. In diese Nuten ist ein Dichtelement eingefügt. Durch dieses Dichtelement wird ein Spalt zwischen den Plattformen abgedichtet. Gleichzeitig sind aber die Plattformen miteinander nicht starr verbunden, so daß insbesondere für thermische Ausdehnungen genügend Spiel verbleibt. Das Dichtelement hat eine profilierte Oberfläche, wodurch sich eine verbesserte Dichtwirkung ergibt.

Zusätzlich zu dem Problem der thermischen Beanspruchung müssen die Laufschaufeln aufgrund der Rotationsgeschwindigkeit des Rotors beim Betrieb hohen Zentrifugalkräften standhalten. Dies gilt insbesondere für Turbinen, die als Antriebsmotoren oder Antriebsturbinen beispielsweise im Flugzeugbereich eingesetzt werden. Für solche Antriebsturbinen sind besonders hohe Drehzahlen vorgesehen. Aufgrund der mit den hohen Drehzahlen verbundenen hohen Zentrifugalkräfte wird insbesondere bei diesen Antriebsturbinen eine möglichst geringe Masse der Laufschaufeln angestrebt. Die US 3,294,364 schlägt hierzu vor, die Plattform von den einzelnen Leitschaufeln zu trennen, also auf eine integrale Einheit, bestehend aus Laufschaufel und Plattform, und deren Vorteile zu verzichten. Denn die mehrteilige Ausbildung erfordert gegenüber der integralen Einheit einen höhere Aufwand und damit einen höheren Zeit- und Kostenbedarf bei der Montage der Laufschaufeln in der Turbine. Die Trennung zwischen Plattform und der eigentlichen Laufschaufel ist beispielsweise auch aus der US 5,244,345 bekannt.

Ferner zeigt die US 3,008,689 eine Anordnung von Laufschaufeln für einen Verdichter. Die Befestigung der Laufschaufeln an den Verdichterscheiben eines Rotors erfolgt durch axiales Verschieben der Laufschaufeln in die tannenbaumförmigen Laufschaufelhaltenuten, wobei die Laufschaufeln einen dazu korrespondierenden Laufschaufelfuß aufweisen. An der Verdichterscheibe sind zwischen den Laufschaufelhaltenuten jeweils zwei in Axialrichtung verlaufende Vorsprünge ausgebildet. Durch eine Verschiebung in Axialrichtung wird eine Plattform zwischen zwei zueinander benachbarten Laufschaufeln montiert, wobei die Plattform an der der Verdichterscheibe zugewandten Unterseite zwei zu den Vorsprüngen korrespondierende Zähne aufweist, die die Vorsprünge hintergreifen. Jede Plattform liegt dabei zwischen zwei Schaufeln derart an geraden Kanten im Bereich des Schaufelfußes an, so dass sie gegenüber den Schaufeln verschiebbar sind.

Aufgabe der Erfindung ist die Angabe einer Leitschaufel mit einer separaten Plattform für eine Strömungsmaschine, die einfach verbindbar und kostengünstig herstellbar und die Leckageverluste im Arbeitsmedium verringert. Weitere Aufgabe der Erfindung ist die Angabe eines Leitschaufelkranzes aus solchen Leitschaufeln.

Erfindungsgemäß wird die auf die Leitschaufel gerichtete Aufgabe gelöst , indem der Trennbereich (50) und eine schaufelseitige Kante (51) am Plattformbereich (36) sich wie Nut (46) und Feder (52) ineinander fügen, insbesondere über die ganze Länge der schaufelseitigen Kante (51).
Durch ein solches Ineinandergreifen wird eine gute Fixierung des Trennbereichs am Plattformbereich erreicht. Zudem ergibt sich durch das Ineinandergreifen eine Abdichtung zwischen dem Trennbereich und dem Plattformbereich gegenüber einem Arbeitsmedium oder auch gegenüber einem Kühlmedium. Das Arbeitsmedium, insbesondere Heißgas, wird im Strömungskanal der Strömungsmaschine geführt, wohingegen das Kühlmittel zur Kühlung der Plattform auf der der Strömungskanalseite abgewandten Seite die Plattform anströmt. Weiter greifen die schaufelseitige Kante und der Plattformbereich dabei wie Nut und Feder ineinander. Dies ist fertigungstechnisch besonders einfach und ermöglicht auch einen einfachen Einbau der Schaufel in die Strömungsmaschine.

Bevorzugtermaßen ist zwischen dem Plattformbereich und der schaufelseitigen Kante ein Zwischenstück einfügbar, welches einen Spalt abdichtet, der nach einem Anfügen des Trennbereichs zwischen dem Trennbereich und dem Plattformbereich verbleibt. Mit einem solchen Zwischenstück wird also ein zwischen dem Plattformbereich und dem Trennbereich verbleibender Spalt gegen ein Eintreten des im Strömungskanal fließenden Arbeitsmediums abgedichtet. Durch das Zwischenstück kann aber auch der Eintritt eines Kühlmediums in den Strömungskanal verringert oder verhindert werden. Weiterhin kann durch das Zwischenstück auch eine mechanische Fixierung des Trennbereichs am Plattformbereich erreicht werden. Vorzugsweise wird dies dadurch erzielt, daß sowohl die schaufelseitige Kante als auch der Plattformbereich eine Nut aufweisen. Diese Nuten liegen sich bei einem Anfügen des Trennbereichs gegenüber. In die Nuten ist das Zwischenstück, insbesondere über die ganze Nutlänge, einlegbar. Die beiden gegenüberliegenden Nuten formen bei einem Anfügen des Trennbereichs somit einen Kanal, in dem das Zwischenstück eingefügt ist. Dies entspricht der Anordnung des Dichtelements zwischen den Plattformen zweier benachbarter Schaufeln, wie es aus der weiter oben genannten WO 97/12125 A1 folgt.

Bevorzugtermaßen weist die Plattform eine Flächenausdehnung auf, wobei der Trennbereich an dieser Flächenausdehnung einen Anteil von mehr als 70% hat. Damit ist die Plattform zu einem überwiegenden Teil in Form des Trennbereichs ausgebildet. Vorzugsweise sind mehr als 90% der Plattform als Trennbereich ausgebildet. Die Plattform ist damit zum größten Teil oder gar praktisch vollständig ein eigenständiges Bauteil.

Vorzugsweise erstreckt sich vom Trennbereich eine Versteifungsrippe, insbesondere in etwa senkrecht zur Flächenerstreckung des Trennbereichs, wobei diese Versteifungsrippe bei einem Anfügen des Trennbereichs mit dem Befestigungsbereich verbunden wird. Eine solche Versteifungsrippe dient einer zusätzlichen mechanischen Stabilisierung der Plattform in der Strömungsmaschine. Die Versteifungsrippe greift vorzugsweise in den Befestigungsbereich ein, und insbesondere - wie für den Trennbereich und den Plattformbereich beschrieben - durch eine Nut- und Federausbildung oder durch ein in gegenüberliegende Nuten eingefügtes Zwischenstück. Dadurch ist der Trennbereich zusätzlich zur Fixierung am Plattformbereich auch am Befestigungsbereich fixiert. Durch eine etwa senkrechte Erstreckung der Versteifungsrippe zur Flächenerstreckung des Trennbereichs ergibt sich eine mechanische Fixierung in eine Richtung etwa senkrecht zu der Fixierungsrichtung im Plattformbereich.

Vorzugsweise ist die Leitschaufel als Gasturbinenleitschaufel einer Gasturbine in einem Kraftwerk zur Energieerzeugung ausgeführt. Wie bereits erwähnt ist die Gasturbinenleitschaufel einer besonders hohen thermischen Belastung durch das im Strömungskanal, also dem Heißgaskanal, strömende Heißgas ausgesetzt. Auch die Plattform unterliegt dieser hohen thermischen Belastung. Durch die zumindest teilweise separate Ausführung der Plattform als eigenes Bauteil, dem Trennbereich, werden gleich mehrere Vorteile erzielt, von denen die wesentlichen noch einmal kurz zusammengefasst werden:
1. Die Kühlung der Plattform wird häufig dadurch bewerkstelligt, daß auf der dem Heißgaskanal abgewandten Seite der Plattform Prallkühlbleche angeordnet werden. Solche Bleche weisen Öffnungen auf, über die Kühlluft senkrecht auf die zu kühlende Seite der Plattform geleitet wird. Das Aufbringen solcher Prallkühlbleche kann bei einer vollständig einstückig ausgebildeten Leitschaufel schwierig sein. Probleme treten insbesondere dann auf, wenn eine Doppelplattform vorgesehen ist. Bei der Doppelplattform übernimmt ein heißgasseitiger Plattformteil die Abschirmung des Heißgases, während ein diesem heißgasseitigen Plattformteil in radialer Richtung gegenüberliegender Lastplattformteil die Lastaufnahme übernimmt. Bei einem solchen Doppelplattform-Konzept verbleibt relativ wenig Platz zwischen den Plattformteilen, so daß ein Anschweißen von Prallkühlblechen aufwendig und schwierig ist. Bei einem separaten Trennbereich entstehen diese Schwierigkeiten nicht, da der Trennbereich losgelöst von der übrigen Schaufel in einfacher Weise mit Prallkühlblechen oder weiteren Mitteln, z.B. Turbulatoren oder Rippen, versehen werden kann.
2. Ein kritischer Bereich hinsichtlich der thermischen Belastungen ist der Übergangsbereich zwischen dem Schaufelblatt und der Plattform, da es hier zu einer Verrundung und damit Materialanhäufung kommt. Dieser Übergangsbereich ist schwer kühlbar und gleichzeitig aufgrund der Materialanhäufung besonders stark thermischen Spannungen ausgesetzt. Durch die separate Ausführung des Trennbereichs kann nun dieser Übergangsbereich effektiv und in einfacher Weise gekühlt werden. Dies geschieht mittels einer Durchleitung von Kühlluft durch einen Spalt zwischen dem Trennbereich und dem Plattformbereich. Die Kühlluft strömt somit durch diesen Spalt unmittelbar am kritischen Übergangsbereich vorbei und kühlt diesen dabei.

Erfindungsgemäß wird die auf einen Leitschaufelkranz gerichtete Aufgabe gelöst durch einen Leitschaufelkranz mit Leitschaufeln gemäß einer der obigen Ausführungen, wobei der jeweils einer Leitschaufel zugeordnete Trennbereich zwischen zwei unmittelbar zueinander benachbarten Leitschaufeln angeordnet ist.

Es wird also derjenige Teil der Plattform als Trennbereich ausgeführt, der jeweils zwischen zwei benachbarten Leitschaufeln liegt. Der gesamte Leitschaufelkranz wird also aus Leitschaufeln mit dazwischen separat eingefügten Trennbereichen aufgebaut. Die Vorteile eines solchen Aufbaus ergeben sich entsprechend den obigen Ausführungen zu den Vorteilen der Leitschaufel.

Vorzugsweise ist zwei zueinander unmittelbar benachbarten Leitschaufeln jeweils ein einziger, gemeinsamer Trennbereich zugeordnet. Somit teilen sich jeweils zwei Leitschaufeln einen dazwischenliegenden Trennbereich. Mit anderen Worten: Jeweils zwei Leitschaufeln haben einen gemeinsamen Plattformbereich, der zwischen ihnen liegt. Dies hat insbesondere einen fertigungstechnische Vereinfachung zur Folge, da die Bauteilanzahl verringert wird.

Ausführungsbeispiele der Erfindung werden anhand der Zeichnung näher erläutert. Es zeigen teilweise schematisch und nicht maßstäblich:
- FIG 1: eine Gasturbine,
- FIG 2: einen Teil einer Gasturbinenleitschaufel in perspektivischer Ansicht,
- FIG 3: eine andere Ausführungsform einer Gasturbinenleitschaufel in perspektivischer Ansicht,
- FIG 4: einen Ausschnitt einer Verbindungsstelle zwischen einem Trennbereich und einem Plattformbereich, und
- FIG 5: eine Aufsicht auf einen Leitschaufelkranz einer Gasturbine.

Gleiche Bezugszeichen haben in den verschiedenen Figuren die gleiche Bedeutung.

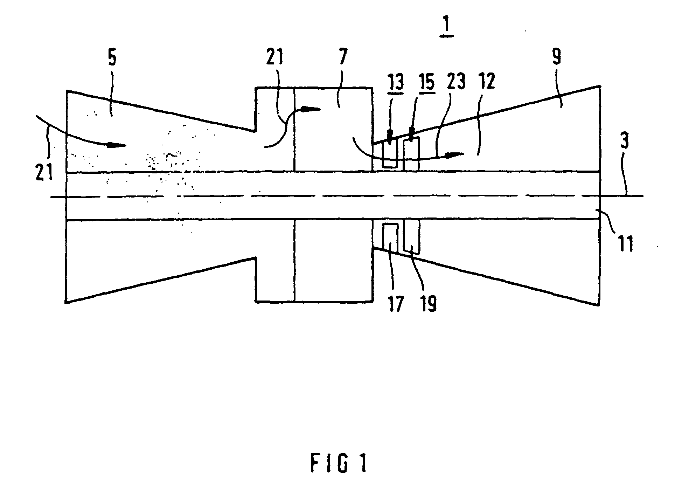

Figur. 1 zeigt eine Gasturbine 1 wie sie beispielsweise im Bereich der Energieerzeugung in einem Kraftwerk eingesetzt wird. Entlang einer Turbinenachse 3 sind hintereinander angeordnet: Ein Verdichter 5, eine Brennkammer 7 und ein Turbinenteil 9. Der Verdichter 5 und das Turbinenteil 9 sind auf einer gemeinsamen Welle 11 angeordnet. Die Welle 11 ist bei einem Kraftwerk mit einem hier nicht dargestellten Generator zur Erzeugung von elektrischer Energie verbunden. Im Turbinenteil 9 ist ein Strömungskanal 12 vorgesehen. Im Strömungskanal 12 sind abwechselnd hintereinander entlang der Turbinenachse 3 Leitschaufelkränze 13 und Laufschaufelkränze 15 angeordnet, von denen jeweils nur ein Kranz beispielhaft gezeigt ist. Jeder Leitschaufelkranz 13 ist aus Gasturbinenleitschaufeln 17 aufgebaut. Jeder Laufschaufelkranz 13 ist aus Gasturbinenlaufschaufeln 19 aufgebaut.

Beim Betrieb der Gasturbine 1 wird Umgebungsluft 21 im Verdichter 5 verdichtet und der Brennkammer 7 zugeführt. Dort wird sie unter Zugabe von Brennstoff verbrannt. Das entstehende heiße Abgas 23 (auch als Heißgas bezeichnet) wird durch den Strömungskanal 12 geleitet. Dabei erfolgt ein Druckabbau. Die dabei frei werdende potentielle Energie wird als kinetische Energie über die Leitschaufeln 17 und die Laufschaufeln 19 auf die Welle 11 übertragen, die in eine Rotationsbewegung überführt wird. Durch das heiße Abgas 23 sind die Bauteile im Strömungskanal 12, insbesondere die Gasturbinenleitschaufeln 17 und die Gasturbinenlaufschaufeln 19, hohen thermischen Belastungen ausgesetzt.

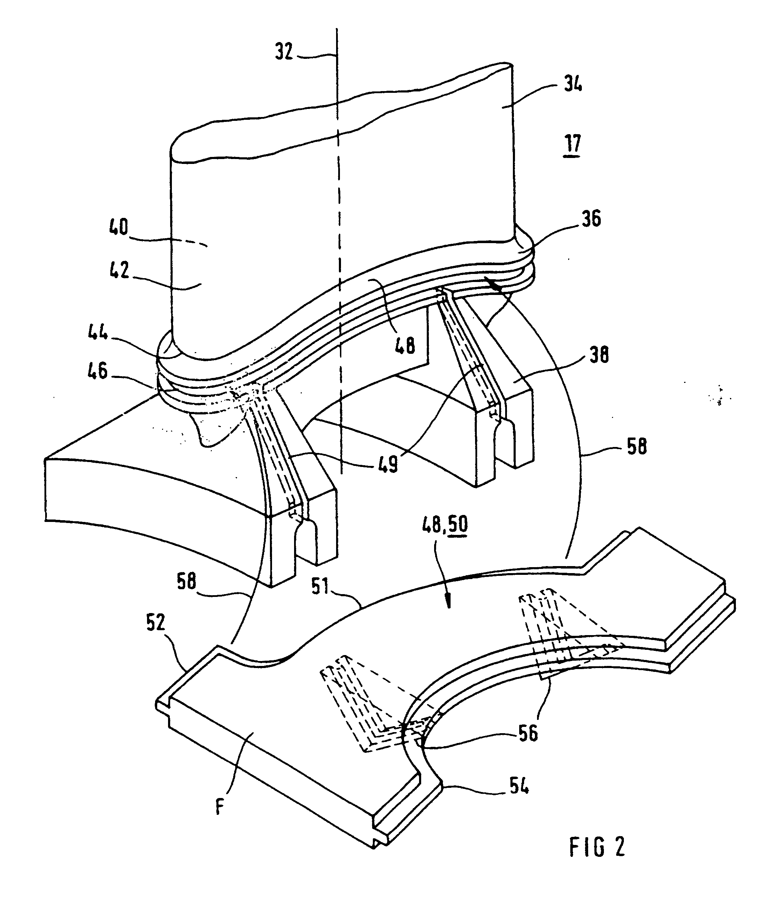

Figur 2 zeigt in perspektivischer Ansicht einen Teil einer Gasturbinenleitschaufel 17. Entlang einer Schaufelachse 32 sind aufeinanderfolgend ein Schaufelblattbereich 34, ein Plattformbereich 36 und ein Befestigungsbereich 38 angeordnet. Der Schaufelblattbereich 34 ragt bei einem Einbau der Gasturbinenleitschaufel 17 in eine Gasturbine 1 in den Strömungskanal 12 hinein. Der Befestigungsbereich 38 dient einer Befestigung der Gasturbinenleitschaufel 17 in der Gasturbine 1. Der Schaufelblattbereich 34 weist eine Saugseite 40 und eine Druckseite 42 auf. In einem verrundeten Übergangsbereich 44 geht der Schaufelblattbereich 34 in den Plattformbereich 36 über.

Der Plattformbereich 36 umfaßt eine senkrecht zur Schaufelachse 32 verlaufende Plattform 48, die bei einem Einbau der Gasturbinenleitschaufel 17 in die Gasturbine 1 den Strömungskanal 12 teilweise begrenzt. Die Plattform 48 ist im wesentlichen als ein separates Bauteil, nämlich als Trennbereich 50 ausgeführt. Im Plattformbereich 36 verläuft etwa senkrecht zur Schaufelachse 32 und der Kontur des Schaufelblattbereichs 34 folgend eine Nut 46. Passend zu dieser Nut 46 ist an einer schaufelseitigen Kante 51 des Trennbereichs 50 eine in die Nut 46 passgenau einfügbare Feder 52, also ein entlang der schaufelseitigen Kante 51 verlaufender Vorsprung 52 angeordnet. Nut und Feder können auch vertauscht sein, d.h. der Trennbereich 50 weist die Nut 46 und der Plattformbereich 36 die Feder 52 auf.

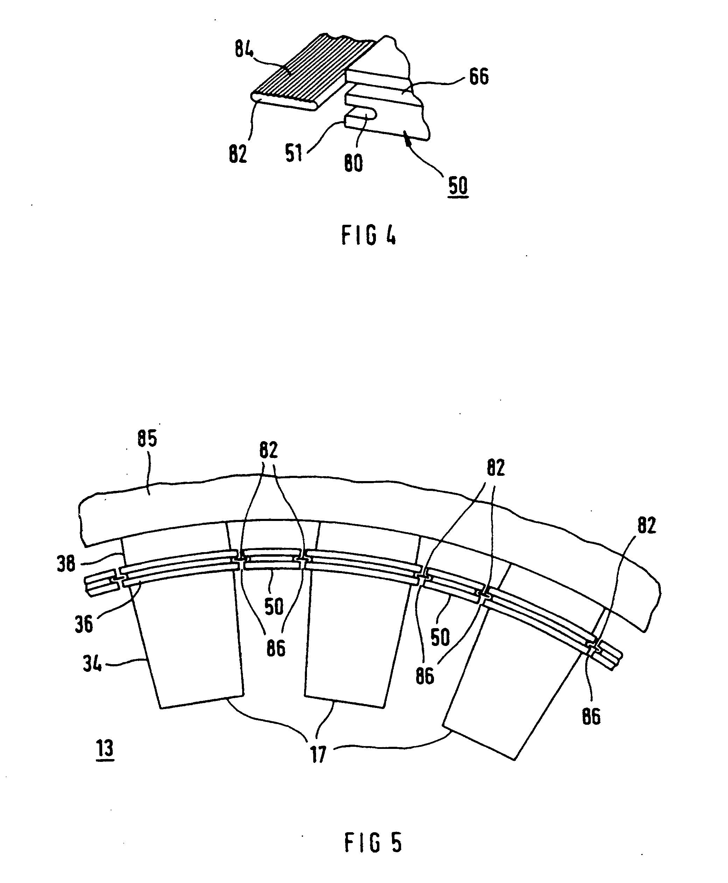

Der Trennbereich 50 weist eine Flächenausdehnung F auf. Etwa senkrecht zu dieser Flächenausdehnung F sind an der Unterseite des Trennbereichs 50 Rippen 56 angeordnet. Beim Anfügen des Trennbereichs 50 an den Plattformbereich 36 greift die schaufelseitige Kante 51 des Trennbereichs 50 mit der Feder 52 in die Nut 46 ein. Dieses Anfügen des Trennbereichs 50 ist mit den Pfeilen 58 dargestellt. Gleichzeitig kommen die Rippen 56 mit Nuten 49 im Befestigungsbereich 38 zur Deckung und sind mit geeigneten, nicht näher dargestellten Verbindungsmitteln in den Befestigungsbereich 38 ein. Ein solches Verbindungsmittel kann z.B. ein näher anhand von Figur 4 beschriebenes Zwischenstück 82 sein. Durch die Rippen 56 wird eine zusätzliche Versteifung der Verbindung zwischen Trennbereich 50 und Plattformbereich 36 erreicht. Der Befestigungsbereich 38 ist so ausgebildet, daß er den wesentlichen Teil der Kräfte aufnimmt, die auf die Gasturbinenleitschaufel 17 beim Betrieb der Gasturbine 1 ausgeübt werden. Der Trennbereich 50 dient somit im wesentlichen nur der Abschirmung des heißen Abgases 23 im Strömungskanal 12, also einer Begrenzung des Strömungskanals 12.

Durch die getrennte Ausführung des Trennbereichs 50 als separates Bauteil ergibt sich insbesondere bei einer gegossenen Gasturbinenleitschaufel 17 eine erhebliche fertigungstechnische Vereinfachung, da eine senkrecht abstehende Plattform 48 den Gießprozeß verkompliziert und verteuert. Zudem ist der Trennbereich 50 unabhängig vom Rest der Gasturbinenleitschaufel 17 aus einem beliebigen Werkstoff angepaßt an die Anforderungen an die Plattform 48 ausführbar. Weiterhin kann der Trennbereich 50 mit einer Beschichtung versehen werden, die eventuell von der Beschichtung der übrigen Gasturbinenleitschaufel 17 abweicht. Zudem ist diese Beschichtung, z.B. bei einem Plasmaspritzen, qualitativ hochwertig aufbringbar, da der Trennbereich 50 unabhängig von der übrigen Gasturbinenleitschaufel 17 im Beschichtungsprozeß optimal orientiert werden kann. Weiterhin ist der übergangsbereich 44 zwischen dem Schaufelblattbereich 34 und dem Plattformbereich 36 effektiv kühlbar, da Kühlluft zwischen dem Trennbereich 50 und dem Plattformbereich 36 durch die Nut 46 und an der Kante 52 vorbei zum Übergangsbereich 44 geleitet werden kann, wo sie den Übergangsbereich 44 wirksam kühlt. Gerade der Übergangsbereich 44 stellt aufgrund einer Materialverdickung eine kritische Stelle hinsichtlich thermischer Spannungen dar.

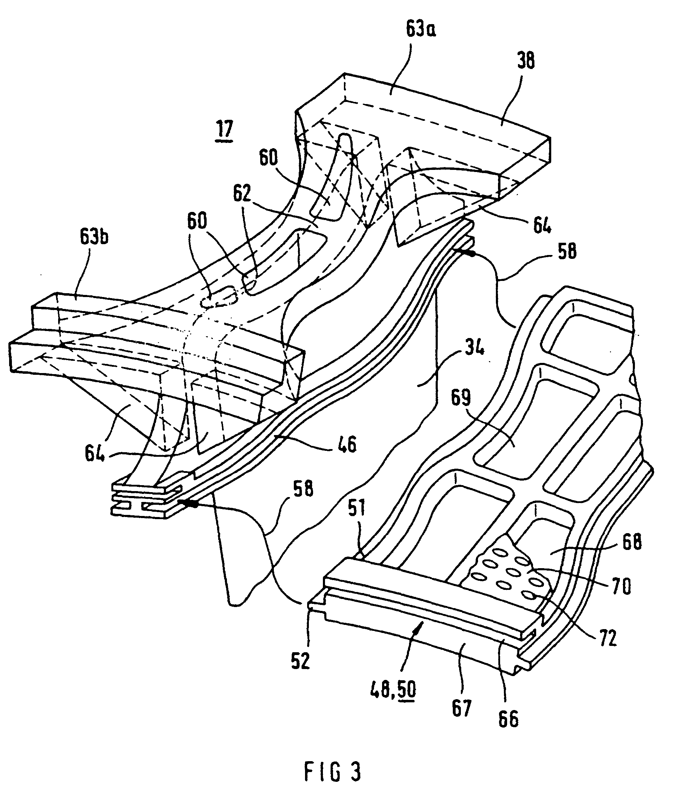

Figur 3 zeigt eine weitere Ausgestaltung einer Gasturbinenleitschaufel 17 in perspektivischer Ansicht. In dieser Darstellung ist erkennbar, daß die Gasturbinenleitschaufel 17 einen Hohlraum 60 aufweist, der sich durch die Gasturbinenleitschaufel 17 entlang der Schaufelachse 32 hindurchzieht. Im Hohlraum 60 sind Versteifungsrippen 62 angeordnet. Der Befestigungsbereich 38 weist einander gegenüberliegende Verhakungskanten 63a und 63b auf. Mit diesen Verhakungskanten 63a und 63b ist die Gasturbinenleitschaufel 17 in der Gasturbine 1 zu befestigen. Mittels Versteifungsrippen 64 sind die Verhakungskanten 63a und 63b versteift. Ein die Plattform 48 bildender Trennbereich 50 ist, wie schon in Figur 2 beschrieben, mit der übrigen Gasturbinenleitschaufel 17 verbindbar. Der Trennbereich 50 weist auf der in dieser Darstellung sichtbaren, einer Heißgasseite gegenüberliegenden Kaltseite 69 Prallkühltaschen 68 auf, über die ein Prallkühlblech 70 mit Prallkühlöffnungen 72 angeordnet ist. Durch die separate Ausführung des Trennbereichs 50 sind diese Mittel zur Kühlung besonders einfach aufzubringen. Eine etwa senkrecht zur schaufelseitigen Kante 51 verlaufende Nut 66 in einem Kopfbereich 67 des Trennbereichs 50 dient entsprechend der Befestigung des Trennbereichs 50 im Plattformbereich 36 einer Befestigung des Trennbereichs 50 an einem weiteren, hier nicht näher dargestellten Bauteil der Gasturbine 1.

Figur 4 zeigt perspektivisch in einem Ausschnitt eine weitere Möglichkeit zur mechanischen Fixierung des Trennbereichs 50 am Plattformbereich 36. Gegenüber einer Fixierung nach dem Nut- und Federprinzip, wie es in den Figuren 2 und 3 dargestellt ist, zeigt Figur 4 eine Befestigung mittels eines Zwischenstücks 82, welches sowohl in eine Nut 80 des Trennbereichs 50 an der schaufelseitigen Kante 51 eingelegt wird, als auch in die Nut 46 des Plattformbereichs 36. Das Zwischenstück 82 weist zudem eine profilierte Oberfläche 84 auf, durch welche eine Dichtwirkung verstärkt wird. Eine solche Dichtwirkung dient der Abdichtung eines Spaltes zwischen dem Trennbereich 50 und dem Plattformbereich 38 gegenüber dem heißen Abgas 23 im Strömungskanal 12. Dies ist noch näher in Figur 5 dargestellt.

Figur 5 zeigt einen Ausschnitt eines Leitschaufelkranzes 13 in einer Aufsicht. Jeweils zwei unmittelbar zueinander benachbarte Gasturbinenleitschaufeln 17 teilen sich miteinander einen in Umfangsrichtung des Leitschaufelkranzes 13 zwischen ihnen liegenden Trennbereich 50. Zwischen den Trennbereichen 50 und den Plattformbereichen 36 der jeweiligen Gasturbinenleitschaufeln 17 liegt ein Spalt 86. Dieser wird gegenüber einem Eindringen des heißen Abgases 23 aus dem Strömungskanal 12 durch das Zwischenstück 82 wie in Figur 4 dargestellt, abgedichtet. Durch die Ausführung des Trennbereichs 50 als ein gemeinsamer Trennbereich 50 für jeweils zwei Schaufeln wird die Bauteilanzahl reduziert und damit eine weitere fertigungstechnische Vereinfachung erreicht.

## Patentansprüche

1. Turbinenleitschaufel (30) die entlang einer Schaufelachse (32) gerichtet, einkristallin oder gerichtet erstarrt ist, mit
• einem Schaufelblattbereich (34),
• einem Befestigungsbereich (38) und
• einem Plattformbereich (36),
wobei der Plattformbereich (36) für die Aufnahme eines von der Schaufel (30) zerstörungsfrei abtrennbaren Trennbereiches (50) ausgelegt ist, wobei der Trennbereich (50) Teil einer dem Plattformbereich (36) zugeordneten Plattform (48) zur Begrenzung eines Strömungskanals (12) in der Strömungsmaschine (1) ist, wobei
der Trennbereich (50) mit einer schaufelseitigen Kante (51) am Plattformbereich (36) anfügbar ist, wobei die schaufelseitige Kante (51) und der Plattformbereich (36) so ausgebildet sind, daß sie bei einem Anfügen des Trennbereiches (50) ineinandergreifen, insbesondere über die ganze Länge der schaufelseitigen Kante (51),
**dadurch gekennzeichnet, dass** die schaufelseitige Kante (51) und der Plattformbereich (36) wie Nut (46) und Feder (52) ineinandergreifen.

2. Turbinenleitschaufel (30) nach Anspruch 1,
**dadurch gekennzeichnet, dass** ein Zwischenstück (82) zwischen dem Plattformbereich (36) und der schaufelseitigen Kante (51) einfügbar ist, wodurch ein Spalt (86) abgedichtet wird, der nach einem Anfügen des Trennbereiches zwischen dem Trennbereich (50) und dem Plattformbereich (48) verbleibt.

3. Turbinenleitschaufel (30) nach Anspruch 2,
**dadurch gekennzeichnet, dass** sowohl die schaufelseitige Kante (51) als auch der Plattformbereich (36) eine Nut (46, 80) aufweisen, welche Nuten (46, 80) sich bei einem Anfügen des Trennbereichs (50) gegenüberliegen und in welche Nuten (46, 80) das Zwischenstück (82), insbesondere über die ganze Länge der Nuten (46, 80), einlegbar ist.

4. Turbinenleitschaufel (30) nach einem der vorhergehenden Ansprüche, **dadurch gekennzeichnet, dass** die Plattform (48) eine Flächenausdehnung (F) aufweist, wobei der Trennbereich (50) an dieser Flächenausdehnung (F) einen Anteil von mehr als 70%, insbesondere mehr als 90%, hat.

5. Turbinenleitschaufel (30) nach einem der vorhergehenden Ansprüche, **dadurch gekennzeichnet, dass** sich vom Trennbereich (50) eine Versteifungsrippe (56), insbesondere etwa senkrecht zu einer Flächenerstreckung des Trennbereichs (50) mit dem Befestigungsbereich (36) verbunden ist.

6. Turbinenleitschaufelkranz (13, 15) mit Leitschaufeln (30) nach einem der vorhergehenden Ansprüche, **dadurch gekennzeichnet, dass** zwischen zwei unmittelbar benachbarten Leitschaufeln (30) ein Trennbereich (50) angeordnet ist.

7. Turbinenleitschaufelkranz (13, 15) nach Anspruch 6, **dadurch gekennzeichnet, dass** zwischen zwei zueinander unmittelbar benachbarten Leitschaufeln (30) jeweils nur ein Trennbereich (50) angeordnet ist.

## Claims

1. Turbine guide vane (30) which is aligned along a blade/vane axis (32) and is single-crystal or directionally solidified, having
• a blade/vane aerofoil region (34),
• a fastening region (38) and
• a platform region (36),
the platform region (36) being designed to receive a separating region (50), which can be separated non-destructively from the blade/vane (30) , the separating region (50) being part of a platform (48), which is associated with the platform region (36) , for bounding a flow duct (12) in the turbomachine (1), it being possible for the separating region (50) to be attached by means of blading-side edge (51) to the platform region (36), the blading-side edge (51) and the platform region (36) being configured in such a way that they mesh together, in particular over the complete length of the blading-side edge (51), when the separating region (50) is attached, **characterized in that** the blading-side edge (51) and the platform region (36) mesh together as groove (46) and tongue (52) .

2. Turbine guide vane (30) according to Claim 1, **characterized in that** an intermediate piece (82) can be introduced between the platform region (36) and the blading-side edge (51), by which means a gap (86), which remains after the attachment of the separating region (50) between the separating region (50) and the platform region (48), is sealed.

3. Turbine guide vane (30) according to Claim 2, **characterized in that** both the blading-side edge (51) and the platform region (36) have a groove (46, 80), which grooves (46, 80) are opposite to one another during an attachment of the separating region (50) and in which grooves (46, 80) the intermediate piece (82) can be laid, in particular over the complete length of the grooves (46, 80) .

4. Turbine guide vane (30) according to one of the preceding claims, **characterized in that** the platform (48) has an area extension (F), the separating region (50) having a proportion of more than 70%, in particular more than 90%, of this area extension (F) .

5. Turbine guide vane (30) according to one of the preceding claims, **characterized in that** a stiffening rib (56) is connected from the separating region (50) to the fastening region (36), in particular approximately at right angles to an area extent of the separating region (50).

6. Turbine guide vane ring (13, 15) having guide vanes (30) according to one of the preceding claims, **characterized in that** a separating region (50) is arranged between two immediately adjacent guide varies (30) .

7. Turbine guide vane ring (13, 15) according to Claim 6, **characterized in that** only one separating region (50) is arranged between two guide vanes (30) immediately adjacent to one another.

## Revendications

1. Aube (30) directrice de turbine, qui est dirigée le long d'un axe (32) d'aube, qui est monocristalline ou à solidification dirigée, comprenant
• une partie (34) de lame d'aube,
• une partie (38) de fixation et
• une partie (36) de plate-forme,
la partie (36) de plate-forme étant conçue pour la réception d'une partie (50) de séparation pouvant être séparée sans destruction de l'aube (30), la partie (50) de séparation faisant partie d'une plate-forme (48) associée à la partie (36) de plate-forme et destinée à délimiter un canal (12) d'écoulement dans la turbomachine (1), dans laquelle
la partie (50) de séparation peut être adjointe par un bord (51 ) du côté de l'aube à la partie (36) de plate-forme, le bord (51) du côté de l'aube et
la partie (36) de plate-forme étant constitués de façon à s'interpénétrer, notamment sur toute la longueur du bord (51 ) du côté de l'aube, lors d'une adjonction de la partie (50) de séparation,
**caractérisée en ce que** le bord (51) du côté de l'aube et la partie (36) de plate-forme s'interpénètrent à tenon (52) et mortaise (46).

2. Aube (30) directrice de turbine suivant la revendication 1, **caractérisée en ce qu'**une pièce (82) intermédiaire peut être insérée entre la partie (36) de plate-forme et le bord (51 ) du côté de l'aube, en rendant ainsi étanche un intervalle (86) qui subsiste après l'adjonction de la partie de séparation entre la partie (50) de séparation et la partie (48) de plate-forme.

3. Aube (30) directrice de turbine suivant la revendication 2, **caractérisée en ce que** tant le bord (51 ) du côté de l'aube que la partie (36) de plate-forme ont une mortaise (46, 80), ces mortaises (46, 80) étant opposées lors de l'adjonction de la partie (50) de séparation et la pièce (2) intermédiaire pouvant être insérée, notamment sur toute la longueur des mortaises (46, 80), dans ces mortaises (46, 80).

4. Aube (30) directrice de turbine suivant l'une des revendications précédentes, **caractérisée en ce que** la plate-forme (48) a une étendue (F) en surface, la partie (50) de séparation représentant une proportion de plus de 70 %, notamment de plus de 90 %, de cette étendue (F) en surface.

5. Aube (30) directrice de turbine suivant l'une des revendications précédentes, **caractérisée en ce qu'**à partir de la partie (50) de séparation, une nervure (56) de raidissement, notamment à peu près perpendiculaire à une étendue en surface de la partie (50) de séparation, est reliée à la partie (36) de fixation.

6. Couronne (13, 15) d'aubes directrices de turbine comprenant des aubes (30) directrices suivant l'une des revendications précédentes, **caractérisée en ce qu'**il est disposé une partie (50) de séparation entre deux aubes (30) directrices immédiatement voisines.

7. Couronne (13, 15) d'aubes directrices de turbine suivant la revendication 6, **caractérisée en ce qu'**il n'est disposé respectivement qu'une partie (50) de séparation entre deux aubes (30) directrices immédiatement voisines l'une de l'autre.
